## Europäisches Patentamt
## European Patent Office
## Office européen des brevets

(11) Veröffentlichungsnummer: **0 145 903**
**B1**

(12) # EUROPÄISCHE PATENTSCHRIFT

(45) Veröffentlichungstag der Patentschrift:
24.02.88

(51) Int. Cl.⁴: **H 02 K 9/04, H 02 K 9/28**

(21) Anmeldenummer: **84112889.5**

(22) Anmeldetag: **25.10.84**

(54) **Rotierende elektrische Maschine.**

(30) Priorität: **28.10.83 DE 3339094**

(43) Veröffentlichungstag der Anmeldung:
**26.06.85 Patentblatt 85/26**

(45) Bekanntmachung des Hinweises auf die Patenterteilung:
**24.02.88 Patentblatt 88/8**

(84) Benannte Vertragsstaaten:
**CH DE FR GB IT LI**

(56) Entgegenhaltungen:
EP-A-0 084 271
DE-A-1 638 305
DE-C-518 773
DE-C-670 313
DE-C-933 939
DE-U-7 519 067
FR-A-699 141
US-A-1 684 168

(73) Patentinhaber: **Franz Kessler KG, Häselstrasse 14, D-7952 Bad Buchau (DE)**

(72) Erfinder: **Benz, Alfred, Vogtstrasse 8, D-7952 Bad Buchau - Kappel (DE)**
Erfinder: **Herrmann, Hans, Dr.- Ing., Schillerweg 3, D-7950 Biberach 1 (DE)**
Erfinder: **Kades, Helmut, Lehenstrasse 1, D-7952 Bad Buchau - Kappel (DE)**
Erfinder: **Reisch, Karl, Dr.- Wilh.- Ladenburger-Strasse 5, D-7952 Bad Buchau (DE)**
Erfinder: **Vötsch, Ernst, Häselstrasse 33, D-7952 Bad Buchau (DE)**

(74) Vertreter: **Eisele, Eberhard, Dipl.- Ing., Patentanwälte Eisele & Dr. Otten Seestrasse 42, D-7980 Ravensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine rotierende elektrische Maschine nach dem Oberbegriff des Anspruchs 1.

Die Leistungsfähigkeit einer elektrischen Maschine wird von der bei der Energieumwandlung auftretenden Verlustwärme und der Temperaturbeständigkeit der verwendeten Werkstoffe begrenzt. Der Wärmestrom muß durch entsprechende Wahl des Kühlsystems so intensiv sein, daß die zulässigen Grenztemperaturen eingehalten werden. Ausgehend von der Kühlmittelführung sind die Mantelkühlung, die Rückenkühlung, die axiale und radiale Innen-Kühlung, die Umlaufkühlung, und die Wärmeabfuhr mit Wärmerohren bekannt.

Aus der US-A-1 684 168 ist eine rotierende elektrische Maschine gemäß dem Gattungsbegriff des Anspruchs 1 bekannt geworden. Danach weist bei der bekannten Vorrichtung der Läufer axiale Kühlkanäle auf, während die Ständerwicklungen von separat angesaugter Kühlluft durchströmt werden. Damit der Bürstenraum nicht durch Öl oder sonstige Verunreinigungen verschmutzt wird, ist dieser vom Luftstrom zu den Kühlkanälen des Läufers abgeschirmt und mit einer Wartungsöffnung für den Zugang zum Bürstenraum versehen.

Die bekannte Vorrichtung eignet sich nicht für eine Luftführung bei höherem Schutzgrad, insbesondere bei staub- oder tropfenhaltiger Luft, da nicht alle wesentlichen stromführenden Maschinenteile von dem Kühlmedium getrennt sind. Außerdem ist die Kühlung des Ständerpaketes durch die bloße Umströmung der Ständerwicklungen unzureichend.

Aus der EP-A-84 271 ist weiterhin eine elektrische Maschine bekannt geworden, bei welcher die Ständerbleche Kühlkanäle in ihren Eckbereichen aufweisen, so daß die Ständerwicklungen selbst von Kühlluft abgeschirmt sind. Bei dieser Maschine ist jedoch eine Kühlung des Läufers nicht vorgesehen, so daß die Leistungsfähigkeit der elektrischen Maschine stark eingeschränkt ist. Es bedarf deshalb auch keiner separaten Abschirmung stromführender Maschinenteilen vom Kühlmedium.

Aus der weiterhin bekannten Druckschrift DE-C-518 773 ist eine Maschine bekannt geworden, die separate axiale Kühlkanäle aufweist, so daß die Wicklungen weitgehend von Kühlluft abgeschirmt sind. Da keine Kühlkanäle in den Ständer- und Läuferblechen vorhanden sind, dürfte hier eine intensive Kühlung dieser Bauteile nur mit großen Kühlflächen möglich sein, was die Maschine in ihren Abmaßen unnötig vergrößert. Wartungsöffnungen für den Zugang zum Bürstenraum sind wegen fehlender Bürsten nicht vorgesehen.

Die Kühlsysteme der bekannten elektrischen Maschinen haben demnach den Nachteil, daß sie bei Betrieb in staub- oder tropfenhaltiger Luft für die direkte Luftkühlung nicht oder nur unzureichend geeignet sind.

Der Erfindung liegt die Aufgabe zugrunde, eine rotierende elektrische Maschine hoher Leistung mit einer intensiven Kühlung zu schaffen, die es erlaubt, zur Kühlung staub- oder tropfenhaltige Luft zu verwenden, wobei jedoch der Betrieb bei höheren Schutzgraden ermöglicht werden soll. Insbesondere soll die Führung des Kühlmediums derart erfolgen, daß Wicklungen, Bürsten, Kommutator oder Kollektor und sonstige stromführenden Teile der Maschine nicht vom Kühlmedium erfaßt werden.

Diese Aufgabe wird ausgehend von einer Maschine der eingangs erwähnten Art erfindungsgemäß durch die kennzeichnenden Merkmale des Anspruchs 1 gelöst.

Der Erfindung liegt der Gedanke zugrunde, daß eine Luftführung bei höherem Schutzgrad mit staub- oder tropfenhaltiger Luft nicht mehr dadurch erfolgen kann, daß die Kühlluft mehr oder weniger stark durch die Maschine hindurchgeblasen wird.

Vielmehr ist es gemäß der Erfindung unerläßlich, daß die Kühlluft nur ganz bestimmte Maschinenteile erreichen kann. Hierbei sollen jedoch die äußere Bauform der Maschine durch Mäntel oder Kühlrippen oder dergleichen bzw. das Volumen und Gewicht nicht vergrößert werden. Die Maschine muß deshalb in ihrem Querschnitt so gewählt werden, daß eine ausreichende Zahl von Kühlkanälen im Ständerjoch in der Nähe der Ständerwicklungen angeordnet werden können. Außerdem soll das Ständerjoch nicht geschwächt werden. Bei Verwendung einer Axialkühlung bietet sich dabei als-Lösung ein quadratischer Ständer an, in dessen Eckbereichen eine ausreichende Zahl von Kühlkanälen angebracht werden können. Die Erfindung ermöglicht deshalb eine Kühlung nahe dem Entstehungsort, ohne daß die Funktionsweise und das Gewicht und Volumen der Maschine beeinträchtigt sind.

Die Verwendung von quadratischen Ständerblechen hat weiterhin den Vorteil, daß das Anschlußgehäuse zum Ständerpaket ebenfalls mit Luftkanälen nur in den Ecken ausgebildet werden kann. Der Bereich im Lagerschild um den Bürstenraum und ggf. auch im gegenüberliegenden Lagerschild wird deshalb vollständig von der Kühlluft des Ständers und des Läufers abgetrennt. Durch entsprechende Deckel wird trotzdem ein freier Zugang zu den Bürsten gewährleistet.

Kern der Erfindung ist es deshalb, eine rotierende elektrische Maschine vorzuschlagen, bei welcher die Kühlluft möglichst nahe an die Wärmequellen herangeführt wird, jedoch keine stromführenden Maschinenteile erreicht, die bei staub- oder tropfenhaltiger Luft beeinträchtigt werden können, und daß trotzdem der Bürstenraum für die Wartung zugänglich ist.

Die Erfindung hat auch den Vorteil, daß durch den separaten Zuführungskanal eine gezielte und vom Bürstenraum abgetrennte Luftzufuhr zu den Kühlungskanälen des Läufers und des Ständers erfolgen kann, wobei dieser Zuführkanal gegenüber dem Bürstenraum mittels einer Dichtung abgedichtet ist, welche gemäß Anspruch 2 eine Spaltdichtung sein kann.

Gemäß der Weiterbildung der Erfindung nach Unteranspruch 3 weist der Bürstenraum ein separates Eingangsfilter bzw. einen Abscheider auf, der die Eingangsluft zu diesem Raum filtert. Hierdurch können Luftverunreinigungen vom Bürstenraum ferngehalten werden.

In Weiterbildung dieses Gedankens ist gemäß Unteranspruch 4 vorgesehen, daß in dem Raum, der die stromführenden Teile umschließt, die Kühlluft einen gewissen Überdruck hat, so daß im Bereich der Dichtungen ein Druckgefälle nach außen hin entsteht. Dies geschieht erfindungsgemäß dadurch, daß über einen Filter oder einen Abscheider im Bereich des Zuführungskanals, wo der Druck etwas höher ist, eine kleine Menge der Kühlluft in diesen Raum gedrückt wird und ein leichter Überdruck entsteht. Die Dichtungen zwischen feststehendem Zuführungskanal zum Läufer und sich drehenden Läufer kann durch diesen Überdruck im Innenraum abgedichtet werden.

Gemäß einer weiteren Ausgestaltung der Erfindung ist vorgesehen, daß die abdichtenden Teile zwischen der Läuferwelle und den Lüftungsgehäuseteilen aus Vergiessmasse bestehen. Gegenüber Teilen aus festem Material, die an Ständer und Läufer angebracht sind, ergibt sich hierdurch ein niedrigerer Aufwand bei der Herstellung. Die dem Bürstenraum gegenüberliegende Seite kann jedoch auch wie dieser gestaltet sein. Sie trägt dann im Ständerteil eine Wand senkrecht zur Läuferachse, mit einer Dichtung zwischen Trennwand und Läufer.

Vorteilhaft ist weiterhin, daß an der Läuferwicklung gegenüber dem Bürstenraum zusätzlich Ventilationsflügel angegossen sind. Durch diese Maßnahme kann die Kühlwirkung auf der wärmeren Seite erhöht werden, ebenso durch angegossene Kühlrippen am Wickelkopf des Ständers.

Ein vorteilhaftes und zweckmäßiges Ausführungsbeispiel der Erfindung ist in der Zeichnung dargestellt und in der nachfolgenden Beschreibung näher erläutert. Es zeigen
Fig. 1 einen Längsschnitt durch eine Gleichstrommaschine,
Fig. 2 einen Schnitt gemäß der Schnittlinie A-A,
Fig. 3 einen Schnitt gemäß der Schnittlinie B-B und

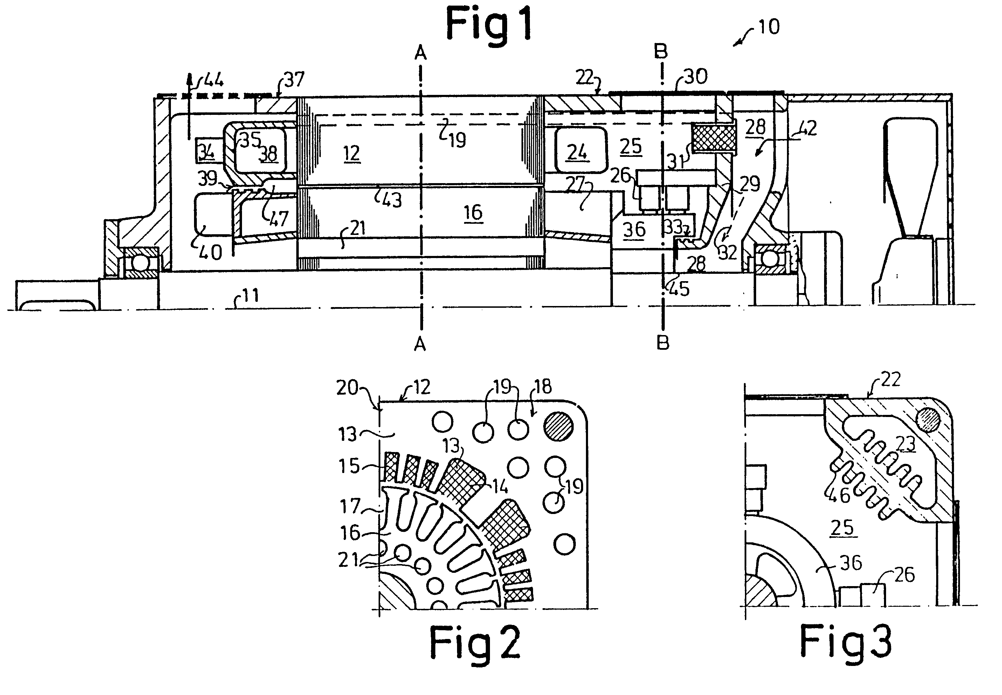

Die in Fig. 1 dargestellte Gleichstrommaschine 10 ist als halber Längsschnitt mit Mittellinie 11 wiedergegeben. Die Gleichstrommaschine 10 besteht aus einem rechteckigen Ständerpaket 12 mit den an sich bekannten Wicklungen für Hauptpole 13, Wendepole 14 und Nuten für Kompensationswicklungen 15. Im Innern des Ständerpakets 12 befindet sich der Läufer 16 mit der an sich bekannten Läuferwicklung 17.

Das rechteckige Ständerpaket 12 weist in seinem Eckbereich 18 Längskanäle 19 auf, die zur Kühlung des Ständerpakets dienen. Durch Anordnung der Kanäle 19 im Eckbereich wird das Joch 20 nicht geschwächt. Es kann demnach eine ausreichend große Kühloberfläche in der Nähe der Wicklungen angebracht werden. Im Läufer 16 sind entsprechende Längskanäle 21 zur Kühlung des Läufers vorgesehen.

Gemäß der Erfindung ist es weiterhin vorgesehen, daß der Anschlußbereich der Kühlkanäle vom Ständer- bzw. vom Läuferpaket zu den anschließenden Gehäuseteilen angepaßt ist. Hierzu ist das vordere Anschlußgehäuseteil 22, dessen Schnitt B-B in Fig. 3 dargestellt ist, mit entsprechenden Zuführungskanälen 23 versehen, die zur Kühlung der Luft im abgeschlossenen Teil Kühlrippen 46 tragen. Die Kühlkanäle 19 des Ständerpakets münden in die Bohrungen des Zuführungskanals 23 im Gehäuseteil des Anschlußgehäuses 22.

Der Raum 25 der Bürsten 26, der die äußere Oberfläche des Kommutators 36 und Wicklungsenden 24, 27 umschließt, ist durch die Trennwand 29 des Luftzuführungskanal 28 von der Kühlluft abgeschlossen. Der Raum 25, der über Deckel 30 von der Umgebung abgetrennt ist, wird über ein Luftfilter 31 mit gereinigter Luft aus dem Luftzuführungskanal 28 beaufschlagt, da sich ein Druckabfall in Richtung des Strömungswegs (Pfeil 32) aufbaut. Dieser Überdruck im Raum 25 bewirkt, daß die Abdichtung des Luftzufuhrkanals 28 durch eine Luftströmung über die Spaltdichtung 33 erfolgt. Der Luftzufuhrkanal 28 mündet in die Bohrungen 21 des Läufers 16 mit Kommutator 36. Dadurch ist gewährleistet, daß keine ungefilterte Luft zum Läufer in den Raum der Bürsten und Wicklungen gelangen kann.

Das Anschlußgehäuseteil 37 am anderen Ende des Ständers 12 bzw. Läufers 16 weist einen entsprechenden Wickelraum 38 auf, der gekühlt werden muß. Hierzu münden die Lüftungskanäle 19, 21 des Ständerpakets 12 und des Läufers 16 in dessen Umgebungsraum. Gegenüber dem Zwischenraum 47 zwischen Ständerpaket, Läuferpaket und Wickelköpfen ist zur Abdichtung nach außen hin eine weitere Spaltdichtung 39 vorgesehen, die aus einer Vergiessmasse hergestellt ist. Zur besseren Kühlung der Wickelköpfe sind Lüfterflügel 40 vorgesehen, die an den Läufer angegossen sind, und Kühlrippen 34 an den Wickelköpfen 35 des Ständers.

Die Luftströmung in der Gleichstrommaschine verläuft wie folgt: Über die Öffnungen 42 wird die Umgebungluft zum einen in den Luftzuführungskanal 23 des Anschlußgehäuseteils 22 und von dort aus in die Lüftungskanäle 19 des Ständerpakets eingeleitet, zum anderen über den Luftzuführungskanal 28 zu den entsprechenden Bohrungen 21 des Läufers 16. Im Bereich des hohen Luftdrucks am Eingang 42 wird ein sehr kleiner Teil der Umgebungsluft über einen Filter 31 dem Raum 25 mit Bürsten und Wicklungen zugeführt. Diese Luft wird dann über die Spaltdichtung 33 in den Luftzufuhrkanal 28 zurückgeführt, bzw. über den Spalt 43 zwischen Ständerpaket 12 und Läufer 16 zur Spaltdichtung 39 und von dort aus in den Gehäuseraum des Anschlußgehäuseteils 37. Durch diese Maßnahme kann keine ungefilterte Umgebungsluft in diesen Raum, der stromführende Teile enthält, gelangen.

Die Kühlluft gelangt über die Kühlkanäle 19 bzw. 21 in das hintere Anschlußgehäuseteil 37 und wird dort mittels weiterer Ventilation durch die Ventilatorflügel 40 nach außen befördert (Pfeil 44).

**Patentansprüche**

1. Rotierende elektrische Maschine (10), mit einem über axiale Kühlkanäle (21) mit Kühlmedium gekühlten Läufer (16) und einem separat hiervon gekühlten Ständer (12), wobei der Bürstenraum (25) gegenüber dem Kühlmedium abgetrennt und mit einer Wartungsöffnung versehen ist, gekennzeichnet durch die Kombination folgender Merkmale:
- in den Eckbereichen eines quadratischen Ständerpakets (12) sind axiale Kühlkanäle (19) vorgesehen, die in mit diesen fluchtenden Zuführkanälen (23) eines vorderen Anschlußgehäuses (22) münden;
das Anschlußgehäuse (22) weist im Zwischenbereich zwischen den im Eckbereich liegenden Zuführkanälen (23) wenigstens eine Wartungsöffnung (30) auf, die zu dem abgeschlossenen Bürstenraum (25) im Anschlußgehäuse (22) führt;
- der Bürstenraum (25) mit Bürsten (26), Kommutator (36), und auch Ständer- (24) und Läufer- (27) -wicklungen sowie dem Zwischenraum (43) zwischen Läuferpaket (16) und Ständerpaket (12) ist gegenüber dem Kühlmedium abgeschlossen, wobei die Zufuhr des Kühlmediums zu den Kühlkanälen (21) des Läufers (16) über einen vom Bürstenraum (25) abgeteilten Zufuhrkanal (28) erfolgt, der gegenüber dem Bürstenraum (25) mittels einer Dichtung (33) abdichtbar ist.

2. Maschine nach Anspruch 1, dadurch gekennzeichnet, daß die Dichtung als Spaltdichtung ausgebildet ist.

3. Maschine nach Anspruch 1 oder 2, dadurch gekennzeichnet, daß der Bürstenraum (25) ein vom Kühlmedium mittels eines Eingangsfilters oder Abscheiders (31) abgedichtet ist.

4. Maschine nach Anspruch 3, dadurch gekennzeichnet, daß eine geringe Menge des Kühlmediums dem Raum (25) über den Filter oder Abscheider (31) zuführbar ist und daß die Spaltdichtung (33) als Auslaß zwischen dem Bürstenraum (25) und dem Zuführungskanal (28) zum Läufer (16) vorgesehen ist.

5. Maschine nach einem oder mehreren der vorhergehenden Ansprüche, dadurch gekennzeichnet, daß eine weitere Spaltdichtung (39) vorzugsweise aus Vergießmasse zwischen den Wickelköpfen von Ständer (12) und Läufer (16) am vom Bürstenraum (25) abgewandten Ende der Maschine angeordnet ist, die das Kühlmedium vom Bürstenraum (25) sowie vom Spalt (43) zwischen Läufer (16) und Ständer (12) und vom Zwischenraum (47) zwischen den Wickelköpfen fern hält.

6. Maschine nach einem oder mehreren der vorhergehenden Ansprüche, dadurch gekennzeichnet, daß angegossene Ventilatorflügel (40) im Bereich der Wickelköpfe des Läufers (16) und Kühlrippen im Bereich der Wickelköpfe des Ständers (12) angeordnet sind, die nicht oder nicht ausschließlich aus dem Werkstoff der stromführenden Teile bestehen.

**Claims**

1. Electrical rotating machine (10) comprising a rotor (16) cooled by cooling medium through axial cooling passages (21) and, cooled separately therefrom, a stator (12), the brush space (25) being isolated from the cooling medium and being provided with a servicing aperture, characterised by the combination of the following features:
there are in the corner zones of a square stator package (12) axial cooling passages (19) which discharge into feed passages (23) flush with the cooling passages (19) and provided in a front connecting housing (22);
- the connecting housing (22) has in the intermediate zone between the feed passages (23) located in the corner zone at least one maintenance aperture (30) which leads to the sealed off brush space (25) in the connecting housing (22);
- the brush space (25) with brushes (26), commutator (36) and also stator (24) and rotor (27) windings as well as the intermediate space (43) between rotor package (16) and stator package (12) is sealed off from the cooling medium;
- the feed of cooling medium to the cooling passages (21) of the rotor (16) takes place via a feed passage (28) divided from the brush space (25), which is adapted to be sealed from the brush space (25) by a gasket (33).

2. Machine according to Claim 1, characterised in that the gasket is constructed as a diaphragm gasket.

3. Machine according to Claim 1 or 2, characterised in that the brush space (25) is sealed from the cooling medium by an inlet filter or separator (31).

4. Machine according to Claim 3, characterised in that a small quantity of cooling medium can be fed to the space (25) through the filter or separator (31) and in that the diaphragm gasket (33) is provided as an outlet between the brush space (25) and the feed passage (28) to the rotor (16).

5. Machine according to one or more of the preceding Claims, characterised in that a further diaphragm gasket (39), preferably consisting of sealing compound, is disposed between the winding heads of stator (12) and rotor (16) at the end of the machine remote from the brush space (25), to keep the cooling medium away from the brush space (25) and from the gap (43) between rotor (16) and stator (12) and from the intermediate space (47) between the winding heads.

6. Machine according to one or more of the preceding Claims, characterised in that there are integrally cast ventilator fins (40) in the region of the winding heads of the rotor (16) and cooling fins in the region of the winding heads of the stator (12), which do not or do not exclusively consist of the material of the live parts.

## Revendications

1. Machine électrique rotative (10), comportant un rotor (16) refroidi par un agent de refroidissement par l'intermédiaire de canaux de refroidissement (21) axiaux, et un stator (12) refroidi séparément du rotor, la chambre des balais (25) étant séparée vis-à-vis de l'agent de refroidissement et pourvue d'un orifice pour l'entretien, machine caractérisée par la combinaison des caractéristiques suivantes:

- dans les zones de coins d'un paquet de tôles du stator (12) carré, sont prévus des canaux de refroidissement (19) axiaux, qui débouchent dans des canaux d'amenée (23), alignés avec ceux-ci, d'un carter de raccordement (22) antérieur;

- le carter de raccordement (22) comporte dans la zone intercalaire entre les canaux d'amenée (23), situés dans la zone de coins, au moins un orifice (30) pour l'entretien, qui mène à la chambre des balais (25) fermée dans le carter de raccordement (22);

- la chambre des balais (25) avec balais (26), commutateur (36) et aussi enroulements du stator (24) et du rotor (27) ainsi qu'avec l'espace intercalaire (43) entre paquet de tôles du rotor (16) et paquet de tôles du stator (12) est fermée vis-à-vis de l'agent de refroidissement, l'amenée de l'agent de refroidissement aux canaux de refroidissement (21) du rotor (16) s'effectuant par un canal d'amenée (28) séparé de la chambre des balais (25), et pouvant être étanché vis-à-vis de la chambre des balais (25) au moyen d'une garniture d'étanchéité (33).

2. Machine selon la revendication 1, caractérisée en ce que la garniture d'étanchéité est constituée sous forme de joint d'étanchéité à labyrinthe.

3. Machine selon la revendication 1 ou 2, caractérisée en ce que la chambre des balais (25) est rendue étanche vis-à-vis de l'agent de refroidissement au moyen d'un filtre d'entrée ou séparateur (31).

4. Machine selon la revendication 3, caractérisée en ce qu'une très faible quantité de l'agent de refroidissement peut être amenée à la chambre (25) par l'intermédiaire du filtre ou séparateur (31), et en ce que le joint d'étanchéité à labyrinthe (33) est prévu comme sortie entre la chambre des balais (25) et le canal d'amenée (28) menant au rotor (16).

5. Machine selon l'une ou plusieurs des revendications précédentes, caractérisée en ce qu'un autre joint d'étanchéité à labyrinthe (39), de préférence en mastic de remplissage, est disposé entre les têtes de bobines du stator (12) et du rotor (16) à l'extrémité de la machine située à l'opposé de la chambre des balais (25), joint d'étanchéité qui maintient l'agent de refroidissement à l'écart de la chambre des balais (25) ainsi que de l'interstice (43) entre rotor (16) et stator (12) et de l'espace intercalaire (47) entre les têtes de bobines.

6. Machine selon l'une ou plusieurs des revendications précédentes, caractérisée en ce que des ailettes de ventilateur (40) venues de fonderie par coulée sont disposées dans la zone des têtes de bobines du rotor (16), et des nervures de refroidissement sont disposées dans la zone des têtes de bobines du stator (12), ailettes et nervures qui ne sont pas, ou pas exclusivement, constituées par le matériau des éléments parcourus par le courant.

Fig1

Fig2

Fig3